# EUROPEAN PATENT SPECIFICATION

(11) **EP 1 335 462 B1**
(45) Date of publication and mention of the grant of the patent: **24.11.2010**
(21) Application number: 03380012.9
(22) Date of filing: 29.01.2003
(51) Int. Cl.: H02G 3/04

(54) **Inside column for low voltage electrical connections**
Binnensaüle für Niederspannungstromverbindung
Colonne intérieure pour connexions electriques basse tension

(30) Priority: 08.02.2002 ES 200200302 U
(43) Date of publication of application: 13.08.2003
(73) Proprietor: Unex Aparellaje Electrico S.L., 08903 L'Hospitalet de Llobregat (Barcelona) (ES)
(72) Inventor: Benito Navazo, Juan Manuel, 08290-Sant Cugat Del Valles (Barcelona) (ES)
(74) Representative: Curell Aguilà, Marcelino

(56) References cited:
- EP-A- 0 828 326
- EP-A- 1 172 910
- DE-A- 4 016 380

## Description

### Field of the invention

The invention relates to an inside column for low voltage electrical connections and, in particular, it consists of a device of the type intended to place openable connection devices alongside work stations in an enclosure, in order to bring to said work stations normal and controlled electrical power, electrical current for lighting and telephony, telematic, security and alarm signals and others such as an optical cable, by means of openable terminal boxes which, being mounted on columns located between the ceiling and floor of the enclosure or on towers located on the floor, can be associated with main cables, concealed in a false ceiling or underneath the floor, via branch cables running inside said columns or towers and which preclude the frequent tangle of cables that forms in work stations, at the same time as separating the cables according to the type of electrical medium carried and/or the installation thereof.

### State of the art

Said columns or towers for placing connection power points at the height of the apparatus in each work station, are known in the art, such as the column which is the object of Spanish Utility Model No. 1.045.130, those marketed by the firms Legrand, Tahalit and many others.

Generally, these columns or towers have some drawbacks owing to their excessive transverse dimension; they are sometimes made up of an exaggerated number of parts (extendible pole and metallic compartmented body and plastic covers), of visible metallic parts which are difficult to paint in a colour that matches the background colour of the enclosure in which they are installed, of a fastener located in between the ceiling and floor preventing any size variation resulting from heat or accidental charges that may cause movement in the upper seat of the columns, and of covers using securing means which can be linked to visible means of said columns, etc.

Document DE-A1-4 016 380 discloses a column which can be used to support objects and surfaces, e.g. lamps, blinds, panels and tabletops, and as ducts for the internal guiding of conduits, wiring and fluid cables, e.g. for communications, electricity, gas heating and water. The column can be installed between ceilings and floor or may serve as horizontal connecting elements between other columns to form a three dimensional enclosure. The column comprises a core profile, with a hollow interior, designed to fasten support profiles which have, in its external face, anchorage slots to support pieces, arms or other objects. In one embodiment, the column comprises all the fearures of the preamble of claim 1.

### Summary of the invention

In an attempt to overcome these drawbacks, in particular the transverse dimension of the columns and the cover attachment means, in order to obtain stylised columns or towers having a minimum diameter straight section and a maximum capacity to allow cables to pass therethrough, the solution has been adopted whereby the cover securing means are concealed and said means make it possible for the covers to be designed with a minimum diameter, completely concealing the attachment means thereof.

According to the above solution, the inside column of claim 1 has been devised.

It is understood that the longitudinal groove refers to a groove running in the longitudinal direction of said self-standing resistant member with the depth direction thereof being radial to said member.

Preferably, said self-standing resistant member has a cross-shaped straight section, the arms of which are formed by pairs of straight arm sections, which are parallel to one another and of equal length, with said straight arms sections being associated with one another, by means of a bridge, and with the immediate straight arm sections of adjacent arms, by means of a core section, at the same time as said straight arm sections have, on their outer ends, a slightly angled tab and, between two straight sections of one arm, define an outer longitudinal groove and an inner longitudinal groove which, being separated from the former by means of the referenced bridge, complements an anti-rotation arrangement for a nut member housed in the tubular core of the self-standing resistant member.

According to one variant, the self-standing resistant member has a three-pronged straight section made up of arms separated at an angle of 120°, which are formed by pairs of straight arm sections which are parallel to one another and of equal length, said straight arm sections being associated with one anther, by means of a bridge and with the immediate straight arm sections of adjacent arms, by means of a core section, at the same time as said straight arm sections have, on their outer ends, a slightly angled tab and, between two straight sections of one arm, define an outer longitudinal groove and an inner longitudinal groove which, being separated from the former by means of the referenced bridge, complements an anti-rotation arrangement for a nut member housed in the tubular core of the self-standing resistant member.

Preferably, said outer longitudinal groove provided on the edge of the arms of the self-standing resistant member constitutes retention means for covers forming the openable housing, which close off the channels defined on said resistant member. Advantageously, the mouth of said outer longitudinal groove has an inner widening sized to receive cover attachment means.

Preferably, the longitudinal channels on the self-standing resistant member are closed off by the openable housing which covers them in pairs. Conveniently, the openable housing is made up of two fluted cover parts which, in the lengthwise direction, include means for attachment to the self-standing resistant member that consist of two marginal tabs which, facing in opposite directions, can be attached to two of the diametrically opposed outer longitudinal retention grooves provided on the self-standing resistant member. More advantageously, the fluted parts of the openable housing are formed by respective semi-cylindrical curved plates the inside diameter of which is equal to the diameter of curvature of the angled tabs on the arms of the self-standing resistant member.

According to one variant, the longitudinal channels on the self-standing resistant member are covered individually by an openable housing formed by three cylindrically curved plates at an angle of 120° and provided with means for attachment to the self-standing resistant member, consisting of marginal tabs which, facing in converging directions, can be attached to two adjacent outer longitudinal retention grooves on the self-standing resistant member.

Preferably, the self-standing resistant member is provided, at least on one of the ends thereof, with a support device that can be adjusted axially and which includes a compression spring. Conveniently, the axially adjustable support device of the self-standing resistant member is made up of a nut, shaped as an element to be attached to the tubular core of the resistant member and prevented from rotating with respect thereto, and an operation bushing which securely introduces a threaded pin into said nut, and a seat for one end of a compression spring, with the other end thereof sitting on a support base that is in the axial direction with respect to a resistant surface.

Preferably, complementary to the axially adjustable support device, the self-standing resistant member is provided with a seat base, secured axially, in which, by means of a socket arrangement, the longitudinal grooves on said member engage with ribs provided on small shaped columns included on said base, it being envisaged to complement said socket arrangement with a central securing device.

Advantageously, the axially adjustable support device and the axially secured seat base are provided with anti-sliding means on the ceiling and floor support and seating surfaces thereof.

Preferably, the axially adjustable support device is closed off by a larger cover made up of two mutually engageable symmetrical parts.

In one variant, said column passes through a false ceiling by means of a hole made therein and preferably said hole is closed off by a smaller cover made up of two mutually engageable symmetrical parts.

Also, preferably, the seat base is covered by a plinth made up of two mutually engageable symmetrical parts.

Conveniently, the self-standing resistant member includes at least one terminal box formed by elements that are individually secured to said resistant member and which are mutually engageable so as to form a housing for electrical connection mechanisms, it being envisaged, preferably, that the terminal boxes to be installed on the self-standing resistant member are formed by two mutually engageable half-shells, which can be secured individually to said self-standing resistant member and closed off at the top and bottom thereof by means of respective common covers provided with openable engagement means.

Preferably, said self-standing resistant member has a regular or irregular star-shaped section.

### Brief description of the drawings

Other advantages and features of the invention will become apparent from the following non-limiting description of preferred embodiments, with reference to the accompanying drawings, in which:
Fig. 1 is a side elevation view of an inside column according to the invention, which is installed between a strong ceiling and the floor and includes a terminal box.
Fig. 2 is a side elevation view of the inside column in the preceding figure, installed between a strong ceiling and the floor, and illustrating a singular feature in that it extends through a false ceiling or roof boarding that contains the main cables to be branched in the direction of the or each of the work stations located next to the terminal box on the column in question.
Fig. 3 is a side elevation view slightly foreshortened at the front, of a tower only secured to the floor, comprising a terminal box which it places at the height of the work station.
Fig. 4 is an exploded perspective view of an upper end of the inside column according to the invention, showing an axially adjustable support device for the self-standing resistant member which is the core of the column, said device being accompanied by two larger half-shells belonging to a larger cover, which correspond to the installation shown in Fig. 1, and two smaller half-shells belonging to a smaller cover, which correspond to the installation shown in Fig. 2, as well as two fluted parts which, in the case of Fig. 2, form an openable housing for the self-standing resistant member.
Fig. 5 is an exploded perspective view of the lower end of the column of the invention, in continuation of Fig. 4, in which the self-standing resistant member is flanked by the two fluted parts acting as covers constituting the housing of the former and as a fixed support device contained inside an annular plinth.
Fig. 6 shows the cross-shaped straight section of the self-standing resistant member, according to a preferred embodiment of the invention, showing the attachment thereto of the openable housing, from which one of the two covers has been displaced.
Fig. 7, similar to the preceding figure, shows a possible embodiment of the invention in which the straight section is three-pronged; also the attachment of the openable housing is shown, from which one of the covers has also been displaced.
Fig. 8 is a section along the line VIII-VIII of Fig. 1 showing how a terminal box is mounted on a self-standing resistant member such as that in Fig. 6, where the terminal box only has one column of electric mechanisms.
Fig. 9, similar to the preceding figure, shows the assembly of a terminal box on the self-standing resistant member in Fig. 6, when the terminal box has two columns of electric connection mechanisms which can be accessed from opposite sides of the box.
Fig. 10 is an exploded perspective view of the axially adjustable support device comprising a support base, a compression spring, an operation bushing, a threaded pin and a nut member to be attached, without the possibility of rotation, to the tubular core of the self-standing resistant member.
Fig. 11 is a diametrical section of the ensemble of members shown in the preceding figure once mounted together, the ensemble being mounted on the upper end of a self-standing resistant member and applied to the ceiling.
Fig. 12 is an exploded perspective view of a tower according to the invention comprising a terminal box, the self-standing resistant member, the fixed support device and the plinth therefor.
Fig. 13 is a longitudinal section of the mounted ensemble of members shown in the preceding figure.
Fig. 14 is a perspective view of a tower provided with two superimposed terminal boxes.
Fig. 15 is a diagrammatic view of the arrangement of a four-point terminal box around a self-standing resistant member having a cross-shaped straight section.
Fig. 16, similar to the preceding figure, shows the arrangement of a three-point terminal box around a self-standing resistant member that has a three-pronged straight section.

### Detailed description of some embodiments of the invention

The inside column for low voltage electrical connections formed according to the invention, can adopt two conventional arrangements, namely, that of column 1, per se, and that of tower 2.

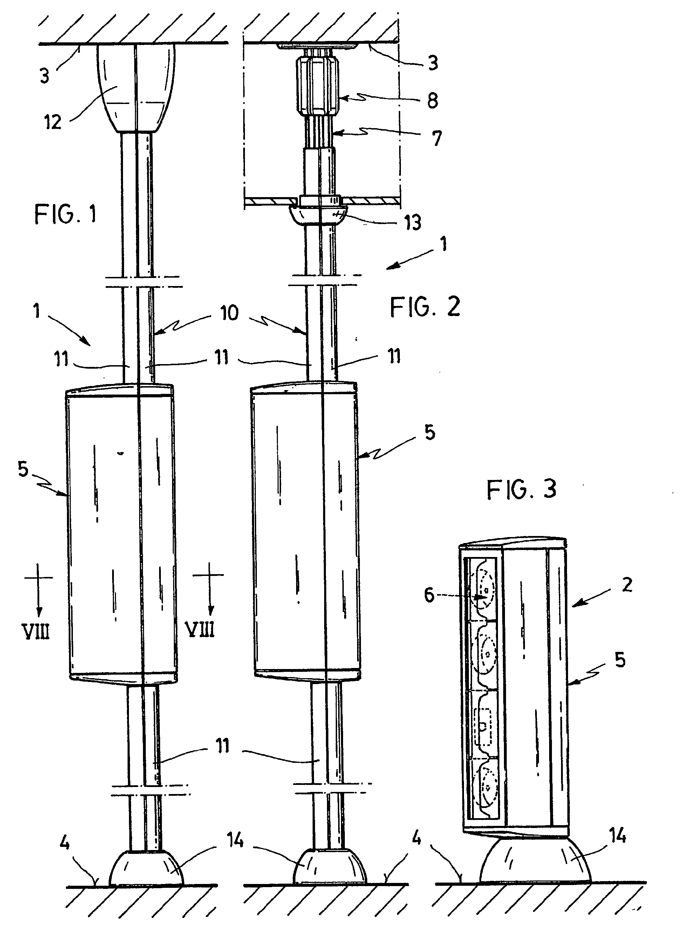

As shown in Figs. 1 and 2, the length and arrangement of column 1 are such that it is installed inside an enclosure supported between a ceiling 3 and a floor 4 both strong, and it is located at points distanced along the walls of said enclosure and in the vicinity of the work stations.

Similarly, as shown in Fig. 3, columns or towers 2 are placed on strong floor 4, without reaching strong ceiling 3, and they are secured therein at points in the vicinity of the work stations.

In both cases, columns 1 and towers 2 are provided with terminal boxes 5 which house the electrical connection mechanisms 6, as shown in Figs. 1, 2 and 3.

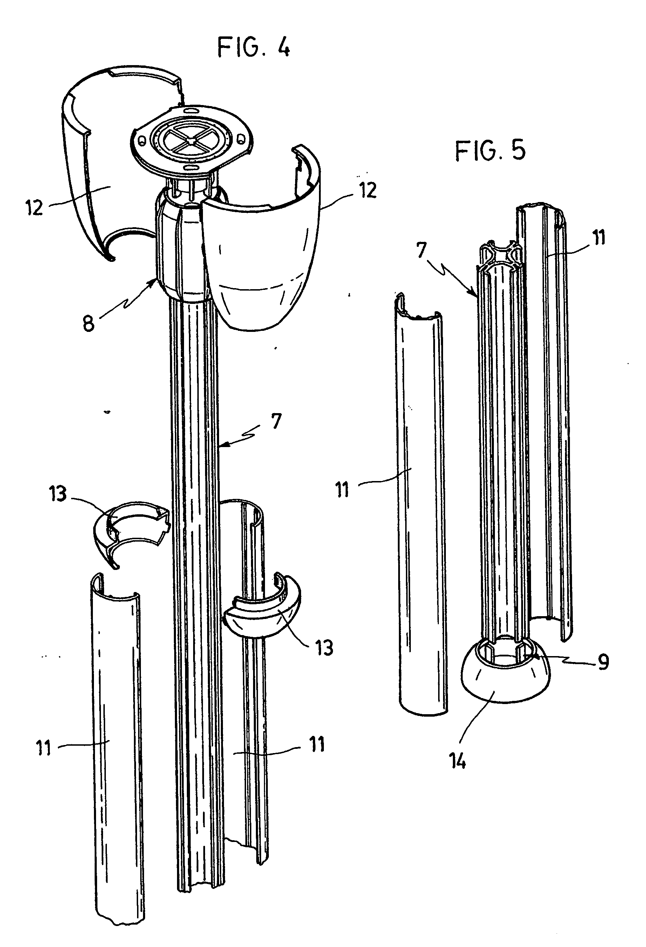

As illustrated in Figs. 4 and 5, on the inside thereof, columns 1 comprise a self-standing resistant member 7, an axially adjustable support device 8 and a fixed support device 9, which can be placed in ceiling 3 and in floor 4, respectively, or vice versa, whereas towers 2 only include self-standing resistant member 7 and fixed support device 9, as is shown in Figs. 4 and 5.

Furthermore, on the outside thereof, columns 1 comprise an openable housing 10 made up of two or more fluted covers 11, two larger symmetrical parts or half-shells 12 of a larger ogival shaped cover, two smaller symmetrical parts or half-shells 13 of a smaller ogival shaped cover and a plinth 14, as is also illustrated in said Figs. 4 and 5.

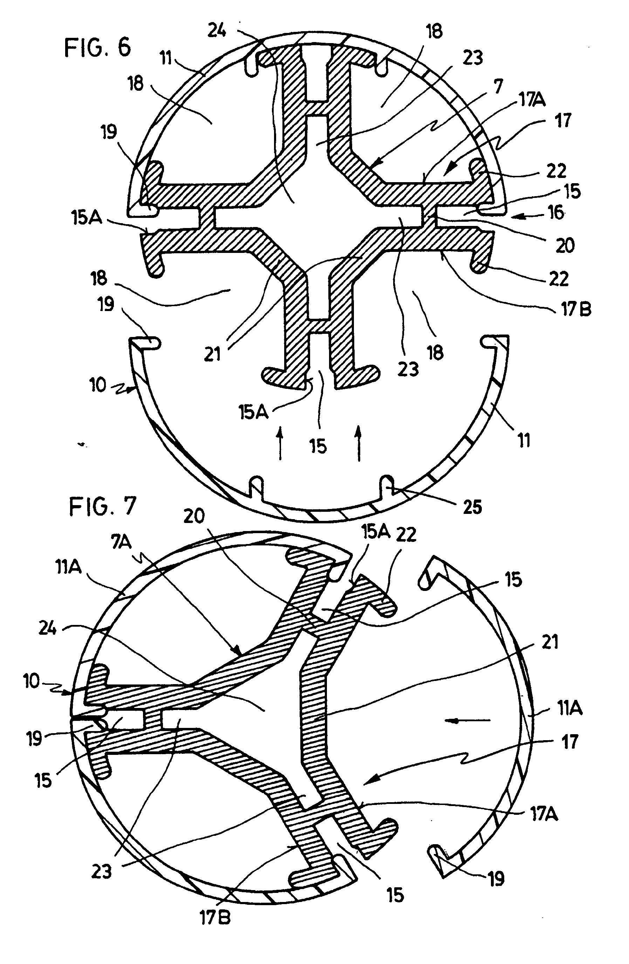

Self-standing resistant member 7 has a star-shaped straight section, which is preferably rectangular, and more specifically cross-shaped, such as that shown in Fig. 6, or it is three-pronged, such as that shown in Fig. 7.

In each case, the main object of the invention is the fact that self-standing resistant member 7 or 7A has, along the lengthwise direction thereof, as shown in Figs. 4 to 7, a deep outer longitudinal groove 15 on the edge 16 of each of the arms 17 delimiting each of the channels 18 that are intended to house the cables branched from the main cables and which enable electrical mechanisms 6, placed inside terminal boxes 5, to be reached.

Said outer longitudinal grooves 15 are intended to engage the marginal tabs 19 of fluted covers 11 forming openable housing 10, said covers being mounted through insertion in said covers. In the case of self-standing resistant member 7 shown in Fig. 6, such fluted covers 11 are semi-cylindrical, whereas in the case of self-standing resistant member 7A shown in Fig. 7, said fluted covers 11A are cylindrical sections curved at an angle of 120°.

As shown in particular detail in Fig. 6, self-standing resistant member 7 has a cross-shaped straight section, arms 17 of which are made up of pairs of straight arm sections 17A and 17B, which are parallel to one another and of equal length and which are associated with one another by means of a bridge 20, corresponding to a longitudinal partition, and with the immediate straight arm sections of adjacent arms, by means of a core section 21, at the same time as said straight arm sections 17A y 17B have, on the outer ends thereof, a slightly angled tab 22 and, between two straight arm sections 17A and 17B of one arm 17, define outer longitudinal groove 15, which is intended to hold fluted covers 11 forming openable housing 10, and an inner longitudinal groove 23 which, being separated from the former by said bridge 20, complements core sections 21 to form an efficient anti-rotation arrangement for a nut member housed in a tubular core 24 of self-standing resistant member 7.

As can be seen in Figs. 6 and 7, the outer longitudinal groove has a widening 15A which enables the snug arrangement of two of the marginal tabs 19 provided on fluted covers 11 and 11A, with said fluted covers 11 also being provided with two centring ribs 25 which delimit a fluted space for the engagement of angled tabs 22 on the edges 16 where the engagement of marginal tabs 19 is not envisaged.

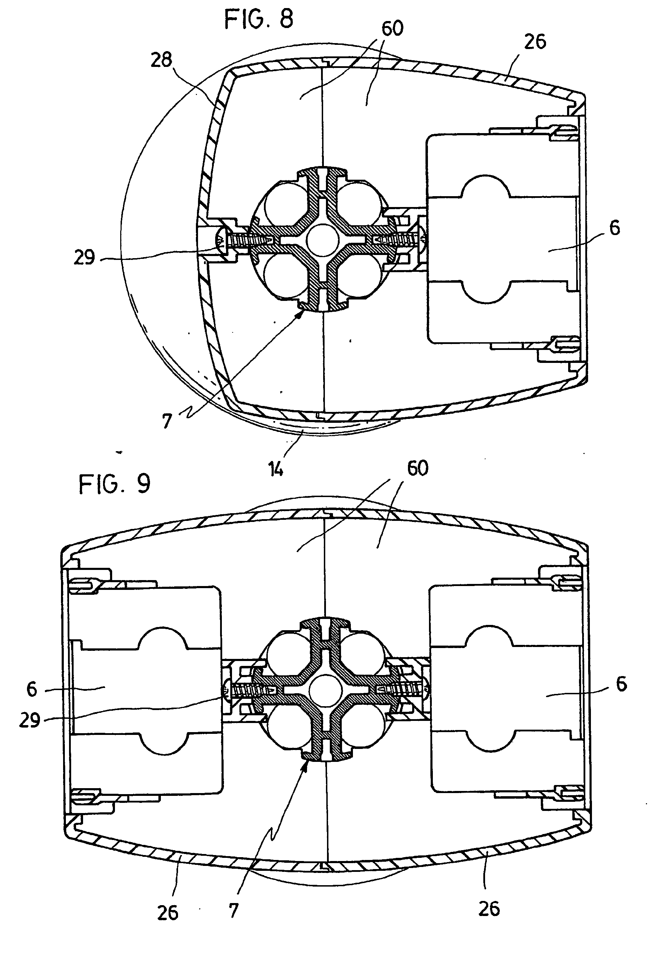

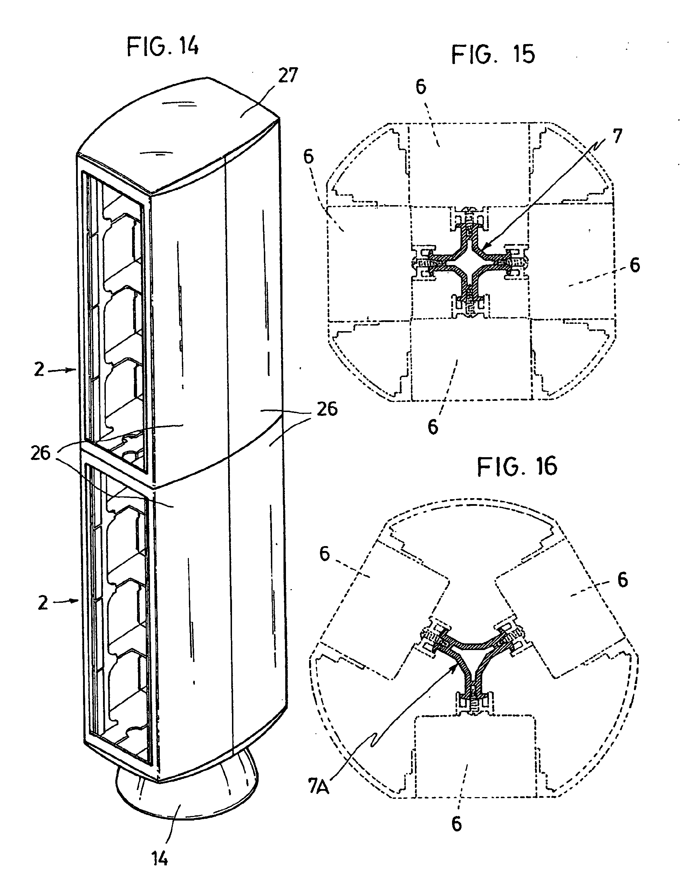

As shown in Figs. 8 and 9, a single terminal box 5 is composed of elements consisting of a front casing 26 that contains electrical mechanisms 6, two covers 27 and a rear casing 28. Front and rear casings 26 and 28 are mutually engageable, as illustrated in Fig. 8, and can be secured individually by means of screws 29 threaded in outer longitudinal retention groove 15. Similarly, as shown in Fig. 9, it is possible to engage two front casings 26 containing respective electrical mechanisms 6. In another aspect, such as that illustrated in Fig. 15, electrical mechanisms 6 can be mounted in three or the four arms 17 of self-standing resistant member 7. A similar arrangement is possible with respect to three-pronged, self-standing resistant member 7A, as illustrated in Fig. 16.

Covers 27 adapt to the type of casing to which they are applied and may include weakening lines 31 to allow self-standing resistant member 7 or 7A to pass therethrough or to allow a terminal box in a mounted column 1 to be enlarged or replaced.

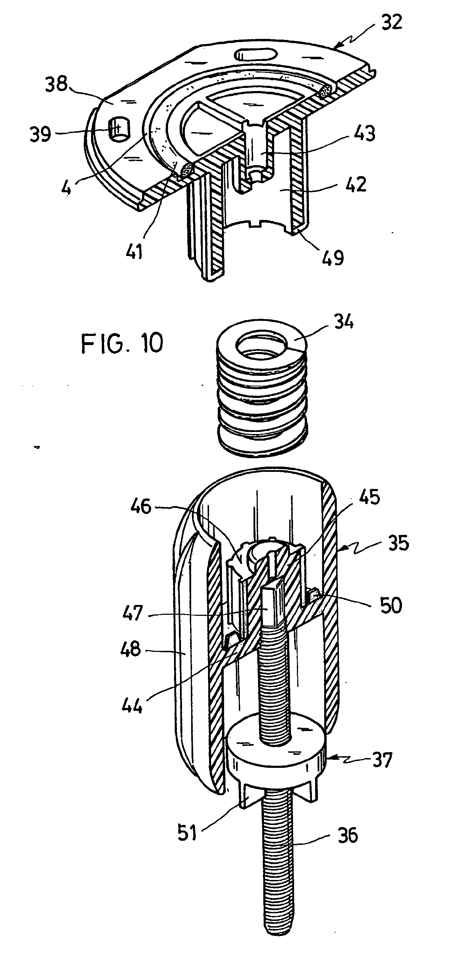

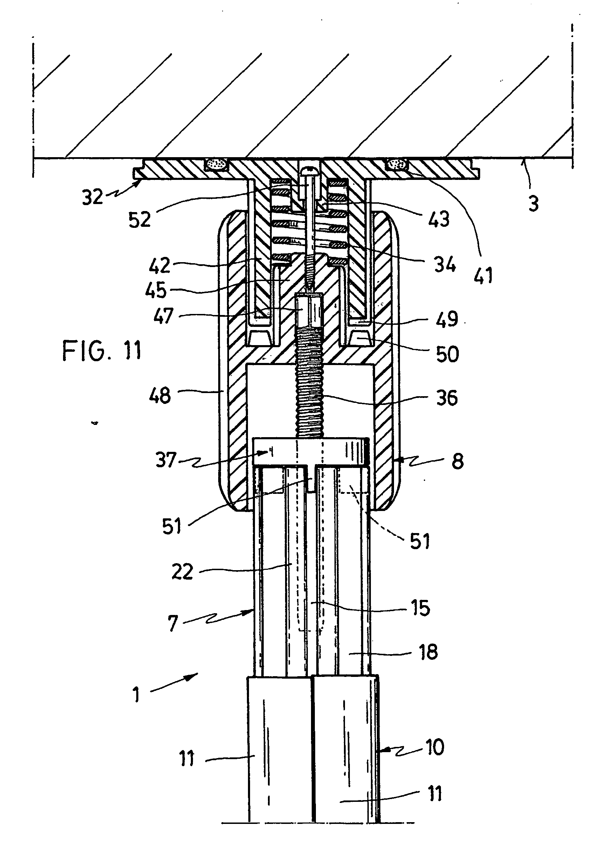

As can be appreciated in Figs. 10 and 11, axially adjustable support device 8, applied to ceiling 3 in the example illustrated in Figs. 1, 2 and 11, consists of an axial support base 32, a compression spring 34, an operation bushing 35, a threaded pin 36 inserted, without the possibility of rotating, in said bushing and a nut 37 to be attached without the possibility of rotating in tubular core 24 of self-standing resistant member 7 or 7A.

Axial support base 32 is shaped in the form of a plate 38 which is provided with fastening holes 39 and a groove containing anti-sliding means, in this case an O-ring 41, and it extends into a socket 42 and a projection 43 which is concentric to the former and shorter.

Operation bushing 35 includes an inner partition 44 that is provided with a projection 45 which, at the top thereof, according to the drawing, forms a seat 46 for compression spring 34, while, at the bottom thereof, it includes a recess for square head 47 of threaded pin 36.

Operation bushing 35 includes ribs 48 to facilitate the manual rotation thereof during mounting.

Moreover, a crenelated design 49 is provided on the lower edge of socket 42, which mates with tabs 50 arranged on inner partition 44 of operation bushing 35.

Fig. 11 shows adjustable support device 8 in its working position, where it can be appreciated that nut 37, in which pin 36 is threaded, is engaged by radial wings 51 in inner longitudinal grooves 23 on self-standing resistant member 7, at the same time as said threaded pin is housed in tubular core 24 of said self-standing resistant member 7. A screw 52 has been provided to enable all the parts of adjustable support device 8 to be joined together before being mounted.

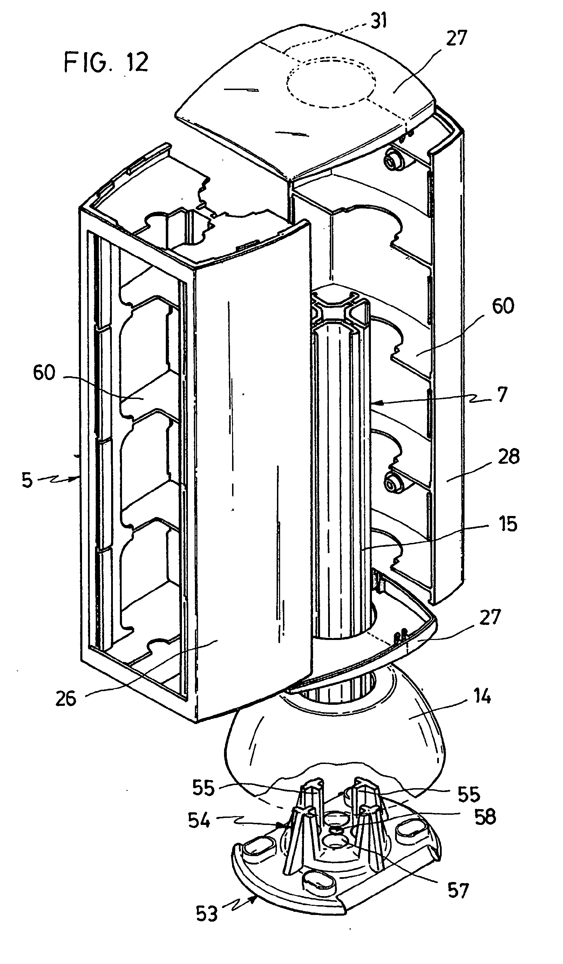

Fig. 12 is an exploded view of a tower 2 according to the invention, showing a fixed support device 9 identical to that used in columns 1 and since this has not been described earlier herein, a description thereof is provided below.

Said fixed support device 9 consists of a seat base 53 which is provided with three or four short columns 54 intended to engage the ribs or inner guide members 55 thereof in outer longitudinal grooves 15 on self-standing resistant members 7 or 7A, respectively, as can be appreciated in Fig. 12.

Furthermore, it is provided with fastening holes 56, holes 57 for the passage of buried cables and a hole 58 for the passage of a screw 59 intended to secure self-standing resistant member 7 or 7A to said seat base 53. Also, the inner base thereof can include anti-sliding means (not shown) similar to the groove and O-ring 41 ensemble on plate 38 described above. Moreover, said seat base 53 is covered by a plinth 14, which in the illustrated embodiment is integral, but which can also be made up of two mutually engageable symmetrical parts, similar to parts 12 and 13 of the larger and smaller covers described above.

In Fig. 12, apart from the elements already described, there is also an exploded view of a terminal box 5, comprising a front casing 26, a rear casing 28 and two covers 27, in which partitions 60 are visible for separating and mounting electrical mechanisms 6, not shown.

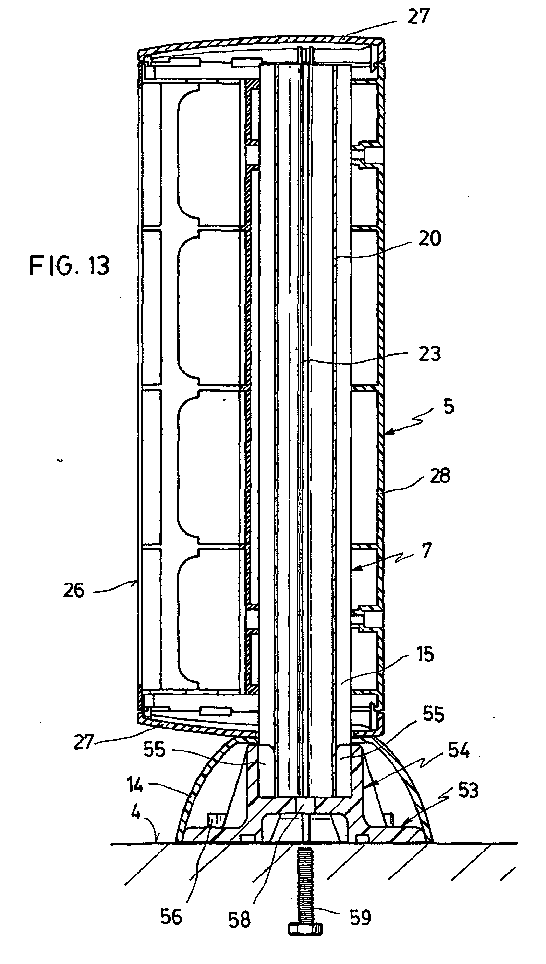

Fig. 13 illustrates the ensemble of members shown in Fig. 12 once they have been mounted, where all that is required is to secure the self-standing resistant member to seat base 53.

Fig. 14 represents a tower 2 provided with two superimposed terminal boxes 5 and, Figs. 15 and 16 show how electrical mechanisms 6 in the terminal boxes are mounted on all arms 17 of self-standing resistant members 7 and 7A, respectively.

## Claims

1. Inside column (1, 2) for low voltage electrical connections, which is intended to contain electrical cables which, being branched from main electrical cables that are respectively buried in the floor or housed in a false ceiling, enable said main electrical cables to be connected to the power points on terminal boxes (5) mounted in the column (1, 2) proper at the level of the work stations provided in the enclosure, said column comprising a self-standing resistant member (7, 7A) which is provided with support devices (8, 9) on at least one of the ends thereof, said self-standing resistant member (7, 7A) having a star-shaped straight section defining a tubular core (24) and longitudinal channels (18) defined between the adjacent arms (17) of said star-shaped straight section, along which longitudinal channels (18) said branched electrical cables extend in an orderly fashion, and an openable housing (10) made up of covers (11, 11A) which can be attached to said self-standing resistant member (7, 7A) to close off said longitudinal channels (18), said self-standing resistant member (7, 7A) having, along the lengthwise direction thereof, on the edge (16) of each of said arms (17), a deep longitudinal groove (15) which constitutes means for attaching said covers (11, 11 A) to said self-standing resistant member (7, 7A), **characterised in that** it comprises at least one terminal box (5) consisting of elements (26, 28) which are mutually engageable, so as to form a housing for electrical connection mechanisms (6), and which can be individually secured by means of screws (29) threaded in said longitudinal grooves (15) of the self-standing resistant member (7, 7A)

2. Column according to claim 1, **characterised in that** self-standing resistant member (7) has a cross-shaped straight section, the arms (17) of which are made up of pairs of straight arm sections (17A, 17B) which are parallel to one another and of equal length, said straight arm sections (17A, 17B) being associated with one another by means of a bridge (20) and with immediate straight arm sections (17A, 17B) of adjacent arms (17), by means of a core section (21), at the same time as said straight arm sections (17A, 17B) include, on the outer ends thereof, a slightly angled tab (22) and, between two straight arm sections (17A, 17B) of one arm (17), define an outer longitudinal groove (15) and an inner longitudinal groove (23) which, being separated from the former (15) by the referenced bridge (20), complements an anti-rotation arrangement for a nut member housed in tubular core (24) of self-standing resistant member (7).

3. Column according to claim 1, **characterised in that** self-standing resistant member (7A) has a three-pronged straight section made up of arms (17) separated at an angle of 120°, which are composed of pairs of straight arm sections (17A, 17B) that are parallel to one another and of equal length, said straight arm sections (17A, 17B) being associated with one another by means of a bridge (20) and with immediate straight arm sections (17A, 17B) of adjacent arms (17) by means of a core section (21), at the same time as said straight arm sections (17A, 17B) include, on the outer ends thereof, a slightly angled tab (22) and, between two straight arm sections (17A, 17B) of one arm (17), define an outer longitudinal groove (15) and an inner longitudinal groove (23) which, being separated from the former (15) by said bridge (20), complements an anti-rotation arrangement for a nut member housed in tubular core (24) of self-standing resistant member (7A).

4. Column according to claims 2 or 3, **characterised in that** outer longitudinal groove (15) provided on edge (16) of arms (17) of self-standing resistant member (7, 7A) constitutes retention means for covers (11) forming openable housing (10) that close off channels (18) defined in said resistant member (7, 7A).

5. Column according to claim 4, **characterised in that** the mouth of outer longitudinal groove (15) includes an inner widening (15A) which is sized to receive attachment means for covers (11).

6. Column according to claim 2, **characterised in that** longitudinal channels (18) on self-standing resistant member (7) are covered by an openable housing (10) which closes them off in pairs.

7. Column according to claim 6, **characterised in that** openable housing (10) is made up of two fluted cover parts (11) which, in the lengthwise direction, include means for attachment to the self-standing resistant member which consist of two marginal tabs (19) which, facing in opposite directions, can be attached to two of the diametrically opposite outer longitudinal retention grooves (15) provided on self-standing resistant member (7).

8. Column according to claim 7, **characterised in that** fluted parts (11) of openable housing (10) are made up of respective semi-cylindrical curved plates the inner diameter of which is equal to the diameter of curvature of angled tabs (22) on arms (17) of self-standing resistant member (7).

9. Column according to claim 3, **characterised in that** longitudinal channels (18) of self-standing resistant member (7A) are covered individually by an openable housing (10) formed by three cylindrically curved plates (11A) at an angle of 120° and provided with means for attachment to self-standing resistant member (7A) consisting of marginal tabs (19) which, facing in converging directions, can be attached to two adjacent outer longitudinal retention grooves (15) on self-standing resistant member (7A).

10. Column according to any of the previous claims, **characterised in that** self-standing resistant member (7, 7A) is provided, on at least one of the ends thereof, with a support device (8) which can be adjusted in the axial direction and comprises a compression spring (34).

11. Column according to claim 10, **characterised in that** axially adjustable support device (8) of self-standing resistant member (7, 7A) is made up of a nut (37), shaped as a member to be attached to tubular core (24) of resistant member (7, 7A) and prevented from rotating with respect thereto, and an operation bushing (35) which securely introduces a threaded pin (36) in said nut (37) and a seat (46) for one end of a compression spring (34) which, at the other end thereof, is seated on a support base (32) axial to a resistant surface.

12. Column according to any of the preceding claims, **characterised in that** self-standing resistant member (7, 7A), complementary to axially adjustable support device (8), is provided with a seat base (53), secured axially, in which, by means of a socket arrangement, longitudinal grooves (15) on said member (7, 7A) engage with ribs (55) provided on small shaped columns (54) included on said base (53), with it being envisaged to complement said socket arrangement with a central securing device (58, 59).

13. Column according to claim 12, **characterised in that** axially adjustable support device (8) and axially secure seat base (53) are provided with anti-sliding means (41) on the ceiling (3) and floor (4) support or seating surfaces thereof.

14. Column according to claims 10 to 13, **characterised in that** axially adjustable support device (8) is closed off by a larger cover made up of two mutually engageable parts (12).

15. Column according to any of the claims 10 to 13, **characterised in that** it passes through a false ceiling by means of a hole made therein and **in that** said hole is closed off by a smaller cover made up of two mutually engageable symmetrical parts (13).

16. Column according to any of the claims 12 to 15, **characterised in that** seat base (53) is covered by a plinth (14) formed by two mutually engageable symmetrical parts.

17. Column according to any of the preceding claims, **characterised in that** terminal boxes (5) to be mounted on self-standing resistant member (7, 7A) are made up of two half-shells (26, 28) which are mutually engageable, can be secured individually to said self-standing resistant member (7, 7A) and are closed off at the top and bottom thereof by respective common covers (27) provided with openable attachment means.

18. Column according to any of the preceding claims, **characterised in that** self-standing resistant member (7, 7A) has a regular star-shaped straight section.

19. Column according to any of the preceding claims, **characterised in that** self-standing resistant member (7, 7A) has an irregular star-shaped straight section.

## Patentansprüche

1. Innensäule (1, 2) für Niederspannungs-Stromverbindungen, welche dazu dient, Stromkabel aufzunehmen, welche von Haupt-Stromkabein abgezweigt sind, die jeweils in dem Boden verlegt oder in einer Zwischendecke eingehaust sind, eine Verbindung der im Wesentlichen Stromkabel mit den Steckdosen an Terminal-Boxen (5) ermöglichen, welche in der Säule (1, 2) exakt auf der Ebene der Arbeitsstationen montiert sind, die in der Abdeckung vorgesehen sind, wobei die Säule ein selbststehendes Widerstands-Glied (7, 7A) aufweist, welches mit Stütz-Geräten (8, 9) an mindestens einem seiner Enden versehen ist, wobei das selbststehende Widerstands-Glied (7, 7A) einen sternförmigen geraden Abschnitt aufweist, der einen röhrenförmigen Kern (24) definiert und Längs-Kanäle (18) aufweist, die zwischen den benachbarten Armen (17) des sternförmigen geraden Abschnitts definiert sind, wobei entlang der Längs-Kanäle (18) die verzweigten Stromkabel sich in geordneter Weise erstrecken, und ein öffenbares Gehäuse (10) aufweist, welches aus Blenden (11, 11A) aufgebaut ist, welche an dem selbststehenden Widerstands-Glied (7, 7A) zum Abschließen der Längs-Kanäle (18) befestigt werden können, wobei das selbststehende Widerstands-Glied (7, 7A) entlang seiner LängsRichtung an der Kante (16) eines jeden der Arme (17) eine tiefe Längs-Nut (15) aufweist, welche Mittel zum Befestigen der Abdeckungen (11, 11A) an dem selbststehenden Widerstands-Glied (7, 7A) bildet,
**dadurch gekennzeichnet, dass** sie mindestens eine Terminal-Box (5) aufweist, welche aus Elementen (26, 28) besteht, die gegenseitig in Eingriff bringbar sind, um ein Gehäuse für Stromverbindungs-Mechanismen (6) zu bilden, und welches individuell mittels Schrauben (29) befestigt werden kann, welche in die Längs-Nuten (15) des selbststehenden Widerstands-Glieds (7, 7A) geschraubt werden.

2. Säule gemäß Anspruch 1, **dadurch gekennzeichnet, dass** das selbststehende Widerstands-Glied (7) einen kreuzförmigen geraden Abschnitt aufweist, dessen Arme (17) aus Paaren gerader Arme-Abschnitte (17A, 17B) aufgebaut sind, welche parallel zueinander und gleich lang sind, wobei die geraden Arm-Abschnitte (17A, 17B) einander mittels einer Brücke (20) zugeordnet sind und unmittelbaren geraden Arm-Abschnitten (17A, 17B) angrenzender Arme (17) mittels eines Kern-Abschnitts (21) zugeordnet sind, wobei gleichzeitig die geraden Armabschnitte (17A, 17B) an ihren äußeren Enden einen leicht angewinkelten Tab (22) beinhalten und zwischen zwei geraden Armabschnitten (17A, 17B) eines Arms (17) eine äußere Längs-Nut (15) und eine innere Längs-Nut (23) definieren, welche, von Ersterer (15) mittels der diesbezüglichen Brücke (20) separiert, eine Anti-Rotationsanordnung für ein Mutter-Glied ergänzt, welches in dem röhrenförmigen Kern (24) des selbststehenden Widerstands-Glieds (7) eingehaust ist.

3. Säule gemäß Anspruch 1, **dadurch gekennzeichnet, dass** das selbststehende Widerstands-Glied (7a) einen dreizackigen geraden Abschnitt aufweist, welcher aus Armen (17) aufgebaut ist, die in einem Winkel von 120° separiert sind, die aus Paaren gerader Arm-Abschnitte (17A, 17B) zusammengesetzt sind, welche parallel zueinander und gleich lang sind, wobei die geraden Arm-Abschnitte (17A, 17B) einander mittels einer Brücke (20) und unmittelbaren geraden Arm-Abschnitten (17A, 17B) angrenzender Arme (17) mittels eines Kern-Abschnitts (21) zugeordnet sind, wobei die geraden Arm-Abschnitte (17A, 17B) gleichzeitig an ihren äußeren Enden einen leicht angewinkelten Tab (22) beinhalten und zwischen zwei geraden Arm-Abschnitten (17A, 17B) eines Arms (17) eine äußere Längs-Nut (15) und eine innere Längs-Nut (23) definieren, welche, von der Ersteren (14) mittels der Brücke (20) separiert, eine Anti-Rotations-Anordnung für ein Mutter-Glied ergänzen, welches in dem röhrenförmigen Kern (24) des selbststehenden Widerstands-Glieds (7A) eingehaust ist.

4. Säule gemäß Anspruch 2 oder 3, **dadurch gekennzeichnet, dass** die äußere Längs-Nut (15), die an der Kante (16) der Arme (17) des selbststehenden Widerstands-Glieds (7, 7A) vorgesehen ist, Haltemittel für Abdeckungen (11) bildet, die das öffenbare Gehäuse (10) bilden, welche die Kanäle (18) verschließen, die in dem Widerstands-Glied (7, 7A) definiert sind.

5. Säule gemäß Anspruch 4, **dadurch gekennzeichnet, dass** die Mündung der äußeren Längs-Nut (15) eine innere Aufweitung (15A) beinhaltet, welche zur Aufnahme von Befestigungsmitteln für Abdeckungen (11) dimensioniert ist.

6. Säule gemäß Anspruch 2, **dadurch gekennzeichnet, dass** die Längs-Kanäle (18) an dem selbststehenden Widerstands-Glied (7) durch ein öffenbares Gehäuse (10) abgedeckt sind, welches sie paarweise verschließt.

7. Säule gemäß Anspruch 6, **dadurch gekennzeichnet, dass** das öffenbare Gehäuse (10) aus zwei geriffelten Abdeckungs-Teilen (11) aufgebaut ist, welche in Längsrichtung Mittel zum Befestigen an dem selbststehenden Widerstands-Glied beinhalten, welche aus zwei Rand-Tabs (19) bestehen, die, in entgegengesetzte Richtungen weisend, an zwei der diametral gegenüberliegenden äußeren Längs-Haltenuten (15) befestigt werden können, welche an dem selbststehenden Widerstands-Glied (7) vorgesehen sind.

8. Säule gemäß Anspruch 7, **dadurch gekennzeichnet, dass** die geriffelten Teile (11) des öffenbaren Gehäuses (10) aus jeweils halbkreisförmigen gekrümmten Platten ausgebaut sind, deren innerer Durchmesser gleich dem Durchmesser der Krümmung der angewinkelten Tabs (22) an den Armen (17) des selbststehenden Widerstands-Glieds (7) ist.

9. Säule gemäß Anspruch 3, **dadurch gekennzeichnet, dass** die Längs-Kanäle (18) des selbststehenden Widerstands-Glieds (7A) individuell von einem öffenbaren Gehäuse (10) abgedeckt sind, welches von drei zylindrisch gekrümmten Platten (11A) in einem Winkel von 120° zueinander gebildet wird und mit Mitteln zur Befestigung an dem selbststehenden Widerstands-Glied (7A) versehen ist, welche aus Rand-Tabs (19) bestehen, die in konvergierende Richtungen weisend, an zwei benachbarten äußeren Längs-Haltenuten (15) an dem selbststehenden Widerstands-Glied (7A) befestigt werden können.

10. Säule gemäß einem der vorstehenden Ansprüche, **dadurch gekennzeichnet, dass** das selbststehende Widerstands-Glied (7, 7A) an zumindest einem seiner Enden mit einem Stützgerät (8) versehen ist, welches in der axialen Richtung verstellbar ist und eine Druckfeder (34) aufweist.

11. Säule gemäß Anspruch 10, **dadurch gekennzeichnet, dass** das axiale einstellbare Stützgerät (8) des selbststehenden Widerstands-Glieds (7, 7A) aus einer Mutter (37) aufgebaut ist, welche als an dem röhrenförmigen Kern (24) befestigbares Glied des Widerstands-Glieds (7, 7A) geformt ist und an einer Rotation in Bezug darauf gehindert ist, und aus einer Betätigungshülse (35) aufgebaut ist, welche einen Gewindestift (36) sicher in die Mutter (37) und einen Sitz (46) für ein Ende einer Druckfeder (34) einführt, welche an ihrem anderen Ende axial zu einer Widerstands-Oberfläche auf einem Stütz-Sockel (32) sitzt.

12. Säule gemäß einem der vorstehenden Ansprüche, **dadurch gekennzeichnet, dass** das selbststehende Widerstands-Glied (7, 7A), komplementär zu dem axial einstellbaren Stützgerät (8), mit einem Sitzsockel (53) versehen ist, axial befestigt, in welchem mittels einer Fassungs-Anordnung Längs-Nuten (15) an dem Glied (7, 7A) in Rippen (55) eingreifen, welche an klein ausgebildeten Säulen (54) vorgesehen sind, die in dem Sockel (53) beinhaltet sind, wodurch vorgesehen ist, die Fassungs-Anordnung mit einem zentralen Befestigungs-Gerät (58, 59) zu ergänzen.

13. Säule gemäß Anspruch 12, **dadurch gekennzeichnet, dass** das axial einstellbare Stützgerät (8) und der axial sichere Sitz-Sockel (53) mit Anti-Rutschmitteln (41) an der Decken- (3) und Boden- (4) Stütze oder deren Sitz-Flächen versehen sind.

14. Säule gemäß einem der Ansprüche 10 bis 13, **dadurch gekennzeichnet, dass** das axial einstellbare Stützgerät (8) mittels einer größeren Abdeckung verschlossen ist, welche aus zwei gegenseitig in Eingriff bringbaren Teilen (12) aufgebaut ist.

15. Säule gemäß einem der Ansprüche 10 bis 13, **dadurch gekennzeichnet, dass** sie durch eine Zwischendecke hindurchführt mittels eines Lochs, welches darin vorgesehen ist und dadurch, dass das Loch mittels einer kleineren Abdeckung verschlossen ist, die aus zwei gegenseitig in Eingriff bringbaren symmetrischen Teilen (13) aufgebaut ist.

16. Säule gemäß einem der Ansprüche 12 bis 15, **dadurch gekennzeichnet, dass** der Sitz-Sockel (53) von einer Sockelleiste (14) verschlossen ist, die aus zwei gegenseitig in Kontakt bringbaren symmetrischen Teilen geformt ist.

17. Säule gemäß einem der vorstehenden Ansprüche, **dadurch gekennzeichnet, dass** die an dem selbststehenden Widerstands-Glied (7, 7A) zu montierenden Terminal-Boxen (5) aus zwei Halbschalen (26, 28) aufgebaut sind, welche gegenseitig in Eingriff bringbar sind, individuell an dem selbststehenden Widerstands-Glied (7, 7A) befestigbar sind und an ihrer Ober- und Unterseite durch jeweils gemeinsame Abdeckungen (27) verschlossen sind, welche mit öffenbaren Befestigungsmitteln versehen sind.

18. Säule gemäß einem der vorstehenden Ansprüche, **dadurch gekennzeichnet, dass** das selbststehende Widerstands-Glied (7, 7A) einen regelmäßen sternförmigen geraden Abschnitt aufweist.

19. Säule gemäß einem der vorstehenden Ansprüche, **dadurch gekennzeichnet, dass** das selbststehende Widerstands-Glied (7, 7A) einen unregelmäßigen sternförmigen geraden Abschnitt aufweist.

## Revendications

1. Colonne intérieure (1, 2) pour des connexions électriques basse tension, qui est destinée à contenir des câbles électriques qui, branchés depuis des câbles électriques principaux qui sont respectivement enterrés dans le sol ou logés dans un faux plafond, permettent auxdits câbles électriques principaux d'être connectés à des points d'alimentation sur des boîtes à bornes (5) montées dans la colonne intérieure (1, 2) de manière appropriée au niveau des postes de travail placés dans l'enceinte, ladite colonne comprenant un élément résistant autoporteur (7, 7A) qui est muni de dispositifs de support (8, 9) sur au moins l'une de ses extrémités, ledit élément résistant autoporteur (7, 7A) ayant une section droite en forme d'étoile définissant un noyau tubulaire (24) et des canaux longitudinaux (18) définis entre des bras adjacents (17) de ladite section droite en forme d'étoile, canaux longitudinaux (18) le long desquels lesdits câbles électriques branchés s'étendent d'une manière ordonnée, et un boîtier pouvant être ouvert (10) constitué de couvercles (11, 11A) qui peuvent être fixés audit élément résistant autoporteur (7, 7A) pour fermer lesdits canaux longitudinaux (18), ledit élément résistant autoporteur (7, 7A) ayant, dans sa direction longitudinale, sur le bord (16) de chacun desdits bras (17), une rainure longitudinale profonde (15) qui constitue un moyen pour fixer lesdits couvercles (11, 11A) audit élément résistant autoporteur (7, 7A), **caractérisée en ce qu'**elle comprend au moins une boîte à bornes (5) composée d'éléments (26, 28) qui peuvent s'accoupler mutuellement, afin de former un boîtier pour des mécanismes de connexion électrique (6), et qui peuvent être fixés individuellement au moyen de vis (29) vissées dans lesdites rainures longitudinales (15) de l'élément résistant autoporteur (7, 7A).

2. Colonne selon la revendication 1, **caractérisée en ce que** l'élément résistant autoporteur (7) a une section droite en forme croix, dont les bras (17) sont constitués de paires de sections de bras droites (17A, 17B) qui sont parallèles l'une à l'autre et de longueur égale, lesdites sections de bras droites (17A, 17B) étant associées l'une à l'autre au moyen d'un pont (20) et à des sections de bras droites directes (17A, 17B) des bras adjacents (17) au moyen d'une section de noyau (21), tandis que lesdites sections de bras droites (17A, 17B) incluent, sur leurs extrémités extérieures, une languette légèrement inclinée (22) et, entre deux sections de bras droites (17A, 17B) d'un bras (17), définissent une rainure longitudinale extérieure (15) et une rainure longitudinale intérieure (23) qui, séparée de la première rainure (15) par le pont (20) susmentionné, vient compléter un agencement antirotation pour un élément formant écrou logé dans le noyau tubulaire (24) de l'élément résistant autoporteur (7).

3. Colonne selon la revendication 1, **caractérisée en ce qu'**un élément résistant autoporteur (7A) a une section droite à trois branches constituée de bras (17) séparés d'un angle de 120°, qui sont composés de paires de sections de bras droites (17A, 17B) qui sont parallèles l'une à l'autre et de longueur égale, lesdites sections de bras droites (17A, 17B) étant associées l'une à l'autre au moyen d'un pont (20) et à des sections de bras droites directes (17A, 17B) des bras adjacents (17) au moyen d'une section de noyau (21), tandis que lesdites sections de bras droites (17A, 17B) incluent, sur leurs extrémités extérieures, une languette légèrement inclinée (22) et, entre deux sections de bras droites (17A, 17B) d'un bras (17), définissent une rainure longitudinale extérieure (15) et une rainure longitudinale intérieure (23) qui, séparée de la première rainure (15) par ledit pont (20), vient compléter un agencement antirotation pour un élément formant écrou logé dans le noyau tubulaire (24) de l'élément résistant autoporteur (7A).

4. Colonne selon les revendications 2 ou 3, **caractérisée en ce que** la rainure longitudinale extérieure (15) placée sur un bord (16) des bras (17) de l'élément résistant autoporteur (7, 7A) constitue un moyen de retenue pour les couvercles (11) formant le boîtier pouvant être ouvert (10) qui ferme les canaux (18) définis dans ledit élément résistant (7, 7A).

5. Colonne selon la revendication 4, **caractérisée en ce que** l'entrée de la rainure longitudinale extérieure (15) inclut un renflement intérieur (15A) qui est dimensionné pour recevoir un moyen de fixation pour les couvercles (11).

6. Colonne selon la revendication 2 **caractérisée en ce que** les canaux longitudinaux (18) sur l'élément résistant autoporteur (7) sont couverts par un boîtier pouvant être ouvert (10) qui les ferme par paires.

7. Colonne selon la revendication 6, **caractérisée en ce que** le boîtier pouvant être ouvert (10) est constitué de deux parties de couvercle cannelées (11) qui, dans la direction de la longueur, incluent un moyen pour la fixation à l'élément résistant autoporteur qui consiste en deux languettes marginales (19) qui, dirigées dans des directions opposées, peuvent être fixées à deux des rainures de retenue longitudinales extérieures (15) diamétralement opposées placées sur l'élément résistant autoporteur (7).

8. Colonne selon la revendication 7, **caractérisée en ce que** les parties cannelées (11) du boîtier pouvant être ouvert (10) sont constituées de plaques courbes semi-cylindriques respectives dont le diamètre intérieur est égal au diamètre de courbure des languettes inclinées (22) sur les bras (17) de l'élément résistant autoporteur (7).

9. Colonne selon la revendication 3, **caractérisée en ce que** les canaux longitudinaux (18) de l'élément résistant autoporteur (7A) sont couverts individuellement par un boîtier pouvant être ouvert (10) formé de trois plaques courbes cylindriques (11A) à un angle de 120° et munis d'un moyen pour la fixation à l'élément résistant autoporteur (7A) consistant en languettes marginales (19) qui, dirigées dans des directions convergentes, peuvent être fixées à deux rainures de retenue longitudinales extérieures (15) adjacentes sur l'élément résistant autoporteur (7A).

10. Colonne selon l'une quelconque des revendications précédentes, **caractérisée en ce que** l'élément résistant autoporteur (7, 7A) est muni, sur au moins l'une de ses extrémités, d'un dispositif de support (8) qui peut être ajusté dans la direction axiale et comprend un ressort de compression (34).

11. Colonne selon la revendication 10, **caractérisée en ce que** le dispositif de support (8) ajustable dans la direction axiale de l'élément résistant autoporteur (7, 7A) est constitué d'un écrou (37), ayant la forme d'un élément à fixer sur un noyau tubulaire (24) de l'élément résistant (7, 7A) et l'empêchant de tourner par rapport à lui, et d'une douille de service (35) qui introduit de manière sûre un axe fileté (36) dans ledit écrou (37) et d'un siège (46) pour une extrémité d'un ressort de compression (34) qui, à son autre extrémité, est placée sur une base de support (32) située axialement par rapport à une surface résistante.

12. Colonne selon l'une quelconque des revendications précédentes, **caractérisée en ce que** l'élément résistant autoporteur (7, 7A), complémentaire du dispositif de support (8) ajustable dans la direction axiale, est muni d'une base de siège (53), fixée axialement, dans laquelle, au moyen d'un agencement de douille, des rainures longitudinales (15) sur ledit élément (7, 7A) s'accouplent avec des nervures (55) placées sur de petites colonnes formées (54) incluses sur ladite base (53), ceci étant envisagé pour compléter ledit agencement de douille par un dispositif de fixation central (58, 59).

13. Colonne selon la revendication 12, **caractérisée en ce que** le dispositif de support (8) ajustable dans la direction axiale et la base de siège (53) fixée axialement sont munis d'un moyen antiglissement (41) sur leurs surfaces de support ou de siège au plafond (3) ou au sol (4).

14. Colonne selon les revendications 10 à 13, **caractérisée en ce que** le dispositif de support (8) ajustable dans la direction axiale est fermé par un couvercle plus grand constitué de deux parties pouvant s'accoupler mutuellement (12).

15. Colonne selon l'une quelconque des revendications 10 à 13, **caractérisée en ce qu'**elle passe par un faux plafond au moyen d'un trou pratiqué dans ledit faux plafond et **en ce que** ledit trou est fermé par un couvercle plus petit constitué de deux parties symétriques pouvant s'accoupler mutuellement (13).

16. Colonne selon l'une quelconque des revendications 12 à 15, **caractérisée en ce que** la base de siège (53) est couverte par une plinthe (14) formée par deux parties symétriques pouvant s'accoupler mutuellement.

17. Colonne selon l'une quelconque des revendications précédentes, **caractérisée en ce que** des boîtes à bornes (5) devant être montées sur l'élément résistant autoporteur (7, 7A) sont constituées de deux demi-coques (26, 28) qui peuvent s'accoupler mutuellement, peuvent être fixées individuellement sur ledit élément résistant autoporteur (7, 7A) et sont fermées en haut et en bas par des couvercles communs respectifs (27) muni d'un moyen de fixation pouvant être ouvert.

18. Colonne selon l'une quelconque des revendications précédentes, **caractérisée en ce que** l'élément résistant autoporteur (7, 7A) a une section droite régulière en forme d'étoile.

19. Colonne selon l'une quelconque des revendications précédentes, **caractérisée en ce que** l'élément résistant autoporteur (7, 7A) a une section droite irrégulière en forme d'étoile.
